# FASCICULE DE BREVET EUROPEEN

(11) **EP 0 784 088 B1**
(45) Date de publication et mention de la délivrance du brevet: **04.08.1999**
(21) Numéro de dépôt: 97400011.9
(22) Date de dépôt: 03.01.1997
(51) Int. Cl.: C09J 9/00, C09J 11/04, C09J 5/08, C08J 9/10

(54) **Joint de colle thermofusible et/ou expansible**
Heissschmelzbare und/oder expandierbare Klebverbindung
Hot melt and/or expandable glue joint

(30) Priorité: 12.01.1996 FR 9600337
(43) Date de publication de la demande: 16.07.1997
(73) Titulaire: RAPID S.A., F-75017 Paris (FR)
(72) Inventeur: Leon, Jean-Pierre, 78800 Houilles (FR)
(74) Mandataire: Durand, Yves Armand Louis

(56) Documents cités:
- EP-A- 0 237 463
- FR-A- 2 418 266
- GB-A- 616 249

## Description

La présente invention concerne d'une manière générale un joint de colle thermofusible et/ou expansible susceptible d'obturer un espace ou une ouverture quelconque.

On a déjà proposé de tels joints ou cordons de colle pour obturer des ouvertures sur un élément quelconque, tel que par exemple une tôle.

Toutefois ces joints ou cordons de colle doivent être temporairement maintenus sur l'élément au niveau de l'endroit à obturer, pour pouvoir chauffer le joint. Or, l'opération de maintien du joint sur l'élément est bien souvent une opération difficile ou délicate du fait que l'élément ou la pièce recevant le joint présente, la plupart du temps, une forme plus ou moins complexe.

Par ailleurs, si le joint ou cordon de colle est initialement solidaire d'un bouchon susceptible d'obturer une ouverture, le bouchon doit comporter un fût ou des pattes d'accrochage du bouchon dans l'ouverture pour permettre le centrage et le maintien du bouchon avant thermofusion et/ou expansion du joint.

Aussi, la présente invention a pour but de remédier à ces inconvénients en proposant un joint qui, à lui seul, assurera son maintien sur la pièce avant l'opération de thermofusion et/ou d'expansion.

A cet effet, l'invention a pour objet un joint de colle thermofusible et/ou expansible susceptible d'obturer un espace ou une ouverture quelconque, caractérisé en ce que dans la matière thermofusible et/ou expansible de ce joint est incorporée une poudre magnétique assurant l'auto-fixation du joint sur une surface magnétiquement conductrice avant thermofusion et/ou expansion dudit joint.

Suivant une autre caractéristique, ce joint peut être solidaire d'un bouchon d'obturation d'une ouverture ménagée dans une pièce en matériau ferreux.

Suivant un exemple de réalisation, ce joint peut comprendre un mélange adhésif constitué d'un terpolymère éthylène/ester acrylique/anhydride maléique, un agent de gonflement constitué par de l'azodicarbonamide et de la poudre magnétique de ferrite.

La poudre de ferrite pourra représenter dans le joint une quantité supérieure à environ 50% en poids dudit joint.

Mais d'autres caractéristiques et avantages de l'invention apparaîtront mieux dans la description détaillée qui suit et se réfère aux dessins annexés, donnés uniquement à titre d'exemple, et dans lesquels :

La figure 1 est une vue partielle et en coupe de deux pièces avant assemblage et sur l'une desquelles est magnétiquement retenu un joint conforme à l'invention.

La figure 2 est une vue similaire à la figure 1, mais montrant les deux pièces assemblées après thermofusion et expansion du joint, de façon à obturer un espace formé entre ces deux pièces.

La figure 3 est une vue à grande échelle et en coupe d'un bouchon muni d'un joint selon l'invention et représenté en position simplement appliquée sur l'élément qui doit le recevoir.

La figure 4 est une vue similaire à la précédente mais montrant le bouchon en position montée sur l'élément, c'est-à-dire après fusion et expansion du joint de colle associé au bouchon.

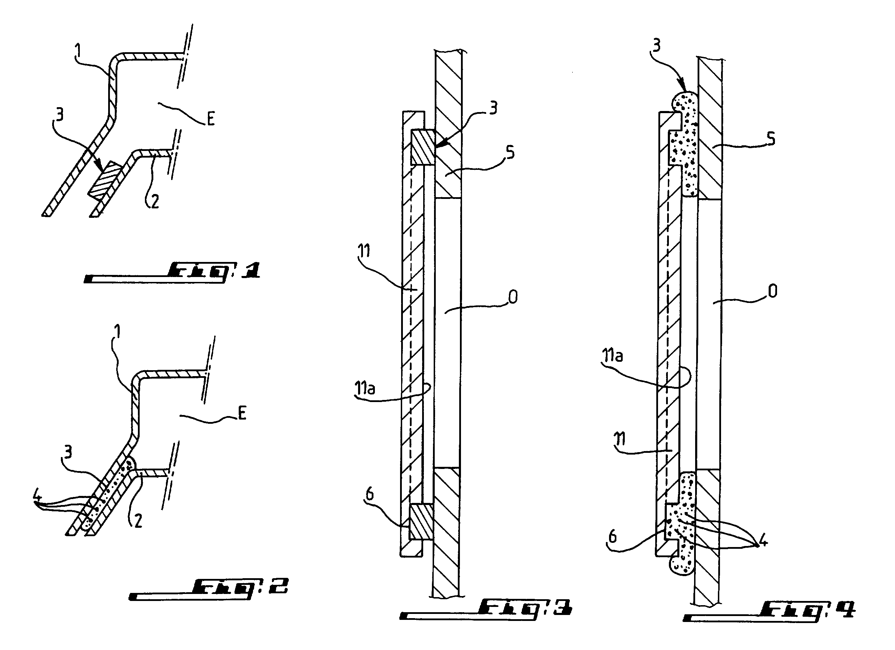

On voit sur les figures 1 et 2 deux pièces métalliques 1 et 2 définissant entre elles un espace E et assemblées par un joint thermofusible et/ou expansible 3 susceptible d'obturer l'espace E.

Le joint 3 est constitué par un mélange adhésif par exemple à base de terpolymère éthylène/ester acrylique/anhydride maléique. Bien que cela ne soit pas obligatoire, le joint 3 peut encore comporter un agent de gonflement tel que par exemple de l'azodicarbonamide susceptible de provoquer une augmentation de volume du joint à une certaine température.

Conformément à l'invention, dans la matière thermofusible et/ou expansible du joint est incorporée une poudre magnétique 4 telle que de la ferrite.

Cette poudre magnétique 4 pourra être en une quantité telle dans le joint qu'elle représente environ 50% en poids dudit joint.

Ainsi, comme on le voit bien sur la figure 1, le joint 3 pourra être maintenu magnétiquement sur la surface de la pièce 2 en matériau ferreux en étant simplement déposé sur ladite pièce ce qui permettra de procéder ensuite au chauffage avec expansion éventuelle dudit joint, de façon à réaliser l'assemblage visible sur la figure 2 et dans lequel l'espace E est convenablement obturé.

On observera ici que la poudre magnétique de ferrite 4 sera intégrée dans la matière thermofusible et/ou expansible du joint 3, lors de l'élaboration de ce joint, par toute méthode appropriée. La nouvelle matière ainsi réalisée pourra également être transformée par tous moyens et procédés appropriés et classiques, notamment avec des presses d'injection de matières thermoplastiques.

Dans la réalisation des figures 3 et 4, on voit que le joint 3 selon l'invention est initialement solidaire d'une pastille ou analogue formant bouchon 11 et susceptible d'obturer l'ouverture O d'une plaque métallique 5 en matériau ferreux.

Plus précisément, le joint ou cordon de colle thermofusible et magnétique 3 selon l'invention est logé dans une rainure annulaire 6 ménagée dans la face inférieure lla de la pastille ou bouchon 11.

Ainsi, comme on le voit sur la figure 3, le bouchon 11 par simple application sur la pièce 5 en matériau ferreux sera magnétiquement retenu sur ladite pièce dans la position d'obturation de l'ouverture O grâce au joint magnétique 3 selon cette invention.

Une telle auto-fixation permettra alors commodément le chauffage du joint 3 à une température suffisante pour provoquer sa fusion et éventuellement son expansion, c'est-à-dire une adhérence qui permettra l'obturation étanche de l'ouverture O, comme on le voit bien sur la figure 4.

Il est important d'observer ici que la pastille formant bouchon 11 n'aura pas besoin de comporter des pattes d'accrochage ou analogue pour permettre la fixation préalable de ce bouchon dans l'ouverture O, puisque le joint 3, en raison de la poudre magnétique 4 qu'il contient, pourra en lui-même avantageusement assurer cette fonction d'accrochage préalable avant chauffage du joint.

Ainsi, la structure des obturateurs ou bouchons connus pourra, grâce à la présente invention, être considérablement simplifiée. En outre, grâce au joint avec poudre magnétique incorporée selon l'invention, on pourra avantageusement réaliser des assemblages ou des obturations sur des pièces métalliques de forme géométrique compliquée, sans que cela nuise à l'étanchéité recherchée.

Bien entendu, l'invention n'est nullement limitée aux modes de réalisation décrits et illustrés qui n'ont été donnés qu'à titre d'exemple.

C'est ainsi que la forme et les dimensions du joint ou cordon de colle selon l'invention peuvent être quelconques. De même un tel joint ou cordon thermofusible peut comprendre ou non un agent gonflant.

C'est dire que l'invention comprend tous les équivalents techniques des moyens décrits ainsi que leurs combinaisons si celles-ci entrent dans le cadre des revendications qui suivent.

## Revendications

1. Joint de colle thermofusible et éventuellement expansible susceptible d'obturer un espace (E) ou une ouverture (O) quelconque, du type dans lequel est incorporée une poudre magnétique (4) assurant l'auto-fixation du joint (3) sur une surface magnétiquement conductrice, caractérisé en ce qu'il comprend un mélange adhésif constitué d'un terpolymère éthylène/ester acrylique/anhydride maléique, de poudre magnétique de ferrite, et éventuellement d'un agent de gonflement constitué par de l'azodicarbonamide.

2. Joint thermofusible et éventuellement expansible selon la revendication 1, caractérisé en ce qu'il est solidaire d'un bouchon (11) d'obturation d'une ouverture (O) ménagée dans une pièce (5) en matériau ferreux.

## Patentansprüche

1. Heißschmelzbare und gegebenenfalls dehnbare Klebverbindung, die fähig ist, irgendeinen Raum (E) oder eine Öffnung (O) zu verschließen, derjenigen Gattung, in welcher ein die Selbstbefestigung der Verbindung (3) an einer magnetisch leitenden Fläche gewährleistendes magnetisches Pulver (4) zugesetzt ist, dadurch gekennzeichnet, daß sie ein aus einem Terpolymer von Äthylen/Akrylester/Maleinanhydrid, aus magnetischem Ferritpulver und gegebenenfalls aus einem durch Azodicarbonamid gebildetes Quellmittel bestehenden Klebegemisch umfaßt.

2. Heißschmelzbare und gegebenenfalls dehnbare Verbindung gemäß Anspruch 1, dadurch gekennzeichnet, daß sie mit einem Abschluß (11) zum Verschließen einer in einem Werkstück (5) aus eisenhaltigem Werkstoff gebildeten Öffnung (O) fest verbunden ist.

## Claims

1. Thermofusible and possibly expansible adhesive joint capable of stopping any space (E) or opening (O), of the type into which is incorporated a magnetic powder (4) ensuring the self-fastening of the joint (3) onto a magnetically conducting surface, characterized in that it comprises an adhesive mixture consisting of an ethylen/ acrylic ester/maleic anhydride terpolymer, of magnetic ferrite powder and possibly of a swelling agent constituted by azodicarbonamide.

2. Thermofusible and possibly expansible joint according to claim 1, characterized in that it is made fast to a stopper (11) for closing an opening (0) formed in a part (5) of ferrous material.
